# EUROPEAN PATENT APPLICATION

(11) **EP 2 978 158 A1**
(43) Date of publication of application: **27.01.2016**
(21) Application number: 14290210.5
(22) Date of filing: 21.07.2014
(51) Int. Cl.: H04L 9/06, H04L 9/08

(54) **Methods and architecture for encrypting and decrypting data**

(71) Applicant: NXP B.V., 5656 AG Eindhoven (NL)
(72) Inventor: de Perthuis, Hugues, 14906 Caen Cedex 9 (FR)
(74) Representative: Hardingham, Christopher Mark

(57) **Abstract**

Methods of securely encrypting and decrypting data stored within computer readable memory of a device are described. Additionally, a memory encryption unit architecture (200) is described. A disclosed encryption method comprises the steps of: providing (122) a key; encrypting (126) the data stored in the computer readable memory using the key; generating (132) an authentication code based on parameters stored in the computer readable memory; wrapping (136) the key using the authentication code to generate a wrapped key; and storing the wrapped key in the computer readable memory (30), wherein the validity of the wrapped key is linked to the authenticity of the data stored In the computer readable memory. This prevents successful decryption in the event of execution of modified or malicious code that alters the data stored in the computer readable memory.

## Description

### Field

The present disclosure describes methods of encrypting and decrypting data stored on computer readable memory using a key. In particular, methods of encrypting and decrypting data are disclosed where the validity of the key is linked to the authenticity of the data stored in the computer readable memory.

### Background

Many devices currently sold are single die Integrated circuits, known as ICs, where a reduced instruction set computing (RISC) micro controller, e.g. an ARM or complex Instruction set computing (CISC) micro controller, e.g. a 8051 core, controls multiple peripherals such as a serial link, general purpose input/output (GPIO). The micro controller data and code are stored in Internal computer readable memory, e.g. flash, EEPROM or ROM. Some of these devices are used in applications where security is important, for example where money transfers are involved, e.g. power meters, credit cards, etc. For some of these systems, it is important to ensure that the code stored In the internal memory is protected against attacks on its confidentiality, Integrity and authenticity.

To protect confidentiality of the code, encryption of the flash memory is usually used, so that even if the entire content of the memory is downloaded via debug capabilities or a failure analysis tool, the content remains secret. However, this is only true If the key used for encryption can also be kept secret. If the key is stored in same technology as the data it protects, this can be difficult to achieve. One solution is to use obfuscation, or to use a different technology such as physical unclonable functions (PUF) to protect the encryption key, but this is either not always effective as the key might have to be handled by the CPU or it may be expensive to implement.

Other methods to protect the integrity and authenticity of the data may include use of a signed hash. In this method, a public key is stored in unalterable memory such as ROM and is used to authenticate a hash. This hash will be compared with a hash computed at boot time by the CPU which will go through the memory. If there Is no match, the boot process will be stopped. One drawback of this method is that hashes are expensive to compute, typically requiring 100 cycles to compute per byte, and will slow down the boot process. Also, it might be enough to induce a fault to skip the comparison between the signed hash and the computed hash. This will also not protect against modification of source code, either induced by a fault or by source code insertion after boot. As signature verification and hashing are expensive, they are usually not repeated after boot.

In summary, even if encryption is used in a system, there are still issues of how to maintain encryption key confidentiality and how to protect source code integrity and authenticity without incurring the high compute time cost of using signatures and hashing both at boot and once a system has started. The following disclosure aims to address these problems.

### Summary

According to a first aspect of the invention, there is provided a method of encrypting data stored within computer readable memory of a device, the method comprising the steps of: providing a key; encrypting the data stored in the computer readable memory using the key; generating an authentication code based on parameters stored In the computer readable memory; wrapping the key using the authentication code to generate a wrapped key; and storing the wrapped key in the computer readable memory, wherein the validity of the wrapped key is linked to the authenticity of the data stored in the computer readable memory.

The above method can be applied to integrated circuits based around a microcontroller controlling multiple peripherals and where the applications require some security, such as when money is involved, e.g. a micro-controller used for power meters, and in security elements, such as credit cards.

The device may be a microcontroller and/or a microprocessor. The device may be a microcontroller comprising a hardware accelerator, such as a memory encryption unit.

Encrypting the data stored in the computer readable memory using the key can comprise the step of generating a ciphertext using the key for at least one memory location located within the computer readable memory. The ciphertext may be generated using a counter based encryption method. Other methods that may be employed include output feedback or cipher feedback. XTS (XOR-encrypt-XOR-based tweaked-codebook mode with ciphertext stealing) mode may also be used. Other modes that allow random access are also suitable. Modes with feedback are more difficult to use if random access for execution from the microcontroller are required, but can be performed if a copy of the memory to another memory is performed at boot.

The parameters used to generate the authentication code can include the ciphertext of at least one memory location in the memory encrypted using the key. This ties the value of the authentication code to the integrity of the contents of the encrypted memory. Accordingly, any adjustment in the contents of the data leads to a different authentication code. Furthermore, this Increases the security of the encryption because a correct authentication code can only be generated by determining the contents of the (encrypted) data In the memory. If the entire contents of the memory are used to generate the authentication code, then the entire contents of the memory must be known to re-generate the correct authentication code.

In embodiments, encrypting the data stored in the computer readable memory using the key may further comprise the step of performing a message authentication code on the ciphertext of at least one location in the memory. This increases the security of the data encrypted in the computer readable memory.

Furthermore, wrapping the ciphertext of at least one location in the memory using the authentication code can comprise the step of performing a message authentication code on the ciphertext. Undertaking this step ensures that the ciphertext provided by the computer readable memory matches an expected ciphertext generated using the parameters supplied by the computer readable memory.

Wrapping the key using the authentication code to generate a wrapped key can comprise the step of encrypting the key using the message authentication code. As noted above, this step provides an additional authentication step to ensure that a generated key matches a supplied key.

In such embodiments, the message authentication code (MAC) can be a cipher-based message authentication code, such as CMAC, for example, or cipher block chaining message authentication code, known as CBC-MAC or Parallelizable message authentication code, known as PMAC. Other constructions based on a hash algorithm are also possible.

Accordingly, a wrapped key may be considered to be a key encrypted using a code, such as an authentication code or authentication tag produced by an encryption mode, such as CMAC.

Further embodiments relating to providing a key may comprise the step of storing the key in a memory encryption unit, known as a MEU. The MEU can be Integral with the device, such as a core of the microprocessor. Alternatively, the MEU may be provided as a separate microprocessor. In such embodiments, the step of encrypting the data stored in the computer readable memory using the key can be undertaken by the MEU. Other steps undertaken by the MEU may include steps requiring the application of a MAC to the encrypted data and the key. In particular, the step of wrapping the key using the authentication code to generate a wrapped key can be undertaken on the MEU. The key may be temporarily stored within the MEU during a power up sequence of the device. The key may be retrieved from flash memory, where it can be stored during power down of the device.

Examples of the computer readable memory are non volatile memory, such as EEPROM, flash and ROM. Other examples of computer readable memory that may be utilised include RAM and magnetic based memory.

According to a second aspect, there is described a method of decrypting data stored within computer readable memory of a device, said method comprising the steps of: retrieving a first wrapped key from the computer readable memory; computing a first authentication code based on parameters stored in the computer readable memory; unwrapping the first wrapped key using the authentication code to retrieve a key; and decrypting the encrypted data using the key to provide the decrypted data, wherein the validity of the key is linked to the authenticity of the data stored in the computer readable memory.

In embodiments of the second aspect, the method may further comprise the steps of: retrieving a second wrapped key from the computer readable memory; computing a second authentication code based on parameters dependent upon every location of the computer readable memory; and decrypting all the data stored in the computer readable memory, such that the validity of all the decrypted data stored in the computer readable memory Is linked to the authenticity of all the data stored in the computer readable memory.

Preferably, the first and/or second wrapped key can be provided by the encryption method described In any of the embodiments described in relation to the first aspect.

According to a third aspect, there is described a memory encryption unit for encrypting data stored in a computer readable memory, said memory encryption unit comprising: a plurality of buffers and a plurality of units, wherein the buffers comprise: a key register for receiving a key; a cipher-based message authentication code register for receiving and storing an authentication code, the authentication code linked to the data stored in the computer readable memory; and a wrapped key register for receiving and transmitting a wrapped key, wherein the wrapped key is the key encrypted with the authentication code, and wherein the units comprise: an encryption core for encrypting and decrypting data stored in the computer readable memory using the key; and an operation module for implementing the authentication code.

In the third aspect, embodiments may further comprise an address decoding and generation unit for providing the key to the encryption core and for providing the authentication code to the operation module. The operation module may be a data exclusive or gate, known as XOR, that can undertake a logical exclusive OR operation on the authentication code, such as with the data provided by the encryption core.

The above described methods protect the confidentiality of the wrapped key. Because the key Is stored within the computer readable memory in an encrypted form, it does not matter whether the key is accessed by the CPU. The key can only be used in combination with the authentication code. Furthermore, because the validity of the authentication code is dependent on the authenticity of the computer readable memory, the computer readable memory must be downloaded to correctly compute the authentication code. The CPU is unable to compute the authentication code itself because it is only provided access to the decrypted contents of the computer readable memory.

Furthermore, the integrity of the encryption process is protected. For example, a single bit modification to the computer readable memory results in an incorrect cipher text being generated. This In turn leads to an incorrect unwrapping of the wrapped key, and an incorrect key. Decryption using an incorrect key provides incorrect data. In the case of boot memory, incorrectly decrypted data prevents the system from booting.

Additionally, the verification stage (the comparison of the calculated unwrapped key with the received unwrapped key) cannot be skipped because it will result in the incorrect key being unwrapped.

Encryption and decryption performance is high because the acts of encryption and decryption can be off-loaded from the main device and onto the MEU. In this manner, the MEU can be optimized to avoid execution latency, e.g. it can be configured to process one block every cycle. Furthermore, the cost is minimal because the MEU is typically an existing block within a CPU. This allows reuse of the existing block, with no additional architecture required. Typical requirements are a few multiplexers and a register to store the wrapped key.

As noted above, during a regular boot the MAC wrapping key will be recomputed by parsing the stored authentication code. The encryption key will not be decrypted correctly if any bit of the source code has been changed. Correspondingly, the code will not be decoded.

The wrapping key computation can also be performed in the background during idle cycles to continuously check the integrity of the flash, If the data stored in the flash is no longer authentic, i.e. it has been maliciously altered, then the wrapped key will not be decrypted successfully.

If cold boot time is important, two authentication or MAC checks could be performed. A first check can be undertaken for cold boot and a second one for a background check. The first one can be performed on a limited area of data contained in the computer readable memory e.g. 1 KB whereas a second MAC could be performed on the whole computer readable memory.

This second wrapped key could be stored in the computer readable memory, and used for background protection. This would require modifying the state machine to support two wrappings. Once the first authentication code is checked, the system will boot and program the background protection with the second authentication code. This will still ensure that plaintext key never leaves the MEU and ensures a quick boot time.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a computer readable medium, which may be a physical computer readable medium, such as a disc or a memory device, or may be embodied as a transient signal. Such a transient signal may be a network download, including an internet download.

### Brief Desciption of Drawings

The disclosure will now be described with reference to the following figures in which like reference numerals are used to denote like elements:
figure 1 is a flow chart outlining the mode of operation from the perspective of a microprocessor of a device;
figure 2 is a flow chart outlining the mode of operation from the perspective of a memory encryption unit (MEU) of the device; and
figure 3 is an outline view of the circuit architecture, showing the MEU.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature In modified and different embodiments.

### Detailed Description

For encryption, a block cipher is already employed in the most systems, adapted to the width of the memory used to store computer code. For memory encryption, the block cipher is usually used in a mode compatible with random access and where a different address will give different encryption, e.g. Counter mode or XTS mode.

This block cipher can be reused as a building block to perform integrity and authenticity protection by being reconfigured to perform a cryptographic (cipher-based) message authentication algorithm (CMAC, CBC-MAC, or others). In the described example, where a cipher based message authentication code (MAC) is used, each block is XORed with previous results and encrypted with a key. Alternative Implementations can be used for other algorithms. In the present case, the key does not need to be secret, but should not be controlled by the attacker and should be different for every device (so that even If a device is hacked, the same hack will not apply to other devices), e.g. it could be the device ID.

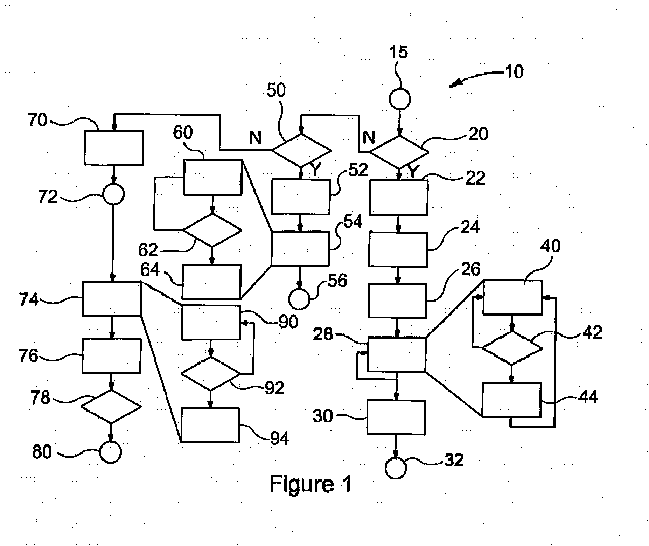

Figure 1 shows a process flow diagram 10 from the perspective of the controlling microprocessor or CPU of the device. Upon boot 15 of the system, the CPU will check 20 whether a firmware update is being initiated. The firmware update may be either initiated externally using known firmware update techniques, such as over the air updates, may be initiated by a user of the system, or may be the load of the firmware upon manufacture of the circuit.

If a firmware update is initiated, then a random or key needs to be created. This will be described in further detail with respect to the memory encryption unit described in Figures 1, 2 and 3 below.

If a new firmware mode is initiated and update of the flash requested 22, the CPU then waits 24 for the memory encryption unit to generate or receive a key. Once the key has been generated, the CPU programs 26 the parameters required for an authentication code, known as a message authentication code (MAC). In the present example, based on a cipher-based message authentication code (MAC) such as cipher block chaining message authentication code, known as CBC-MAC. Other algorithms, such as hash based algorithms could be used, but these tend to be more expensive to compute because existing ciphers within the system may not be used. The parameters are based on values of the flash memory, such as the size of the memory. The CPU then waits to receive the encrypted data, such as the firmware, from the MEU.

Once received, the CPU then either writes 28 the encrypted data to the flash memory either directly or via the MEU. The received data is typically in the form of ciphertext. In this case, due to the encryption protocol selected, blocks of ciphertext are received and written into the flash. Once all the ciphertext has been received from the MEU, the CPU retrieves a wrapped version of the key from the MEU. By wrapped, this is intended to mean that the value has been encrypted with an authentication code. The encryption may be by any known means, such as a block cipher. In this case, the authentication code is the key used for encryption and the plaintext is the key used to encrypt the data to the flash or computer readable memory. The ciphertext (i.e. the value of the key after encryption with the authentication code) is the value of the wrapped key. The value of the wrapped key is then written 30 into non volatile memory such as the flash or other memory such as EEPROM. Once all the data and the wrapped key has been written Into the flash, the CPU initiates 32 a cold reboot of the system (step 50, described below).

As described above, the CPU writes the ciphertext into the flash memory at step 28, which can be broken down into sub-steps 40, 42, 44. In order to generate the ciphertext, the MEU encrypts 40 blocks of plaintext using a nonce. The MEU will then check 42 whether the data (based on information such as the address where the data needs to be written) is required to determine the authentication code (the MAC), i.e. is this data Intended for use for the authentication code computation. If the check is valid, the MAC is either computed 44 or, if already computed, updated. The MAC may be computed after the whole contents of the data to be encrypted and stored in the computer readable memory has been updated. If the check 42 is invalid, for example if the address where the data needs to be written does not need to be encrypted, the MEU will loop back to step 40, and check the data of the next block of plaintext and/or its address.

When the contents of the flash are then written, the key will be stored in one register of the Memory encryption Unit (MEU). This key will either be random or set externally. Once all the source code has been written in flash (or while it is being written), the MEU will read the ciphertext of every memory location and compute a MAC based on the provided parameters and therefore based on the encrypted data. Once a MAC has been computed on all the defined source code area, the MAC will be used to wrap the encryption key, i.e. the key will be encrypted with the MAC and then made available to the CPU. The CPU can then retrieve 30 the wrapped key and write it into flash, before rebooting 32.

At boot time, the CPU executes from ROM code and will copy the wrapped key from flash and program it into the MEU. The CPU will then instruct the MEU to perform a MAC of the flash. The MEU will read the flash, compute the MAC and once it has finished, decrypt the key so it can then be used by the MEU to decrypt flash on the fly.

As the CPU manipulates only the wrapped key, It does not matter If the wrapped key is stored in a part of the flash which can be easily read.

Upon cold boot 50 of the system, the CPU retrieves the wrapped key from the flash memory and writes 52 the wrapped key into the MEU. At this point the CPU also retrieves the parameters of the MAC based on the intrinsic values of the flash memory. The CPU then watts 54 for the MEU to compute 60 the MAC, check 62 the MAC against the expected value of the MAC and unwrap 64 the wrapped key to retrieve the key. Because the parameters used to generate the MAC in step 44 are tied to the encrypted data, any changes to the contents of the data results in an incorrect MAC. This ensures that the integrity of the data stored in the computer readable memory is maintained. Once the unwrapped key is received from the MEU, the CPU initiates a warm reboot 56 of the system (step 70, described below).

On a warm reboot 70 the MEU will then start to perform background checks when the flash Is not being accessed by CPU.

On warm boot 70 the CPU can boot 72 from flash. In order to execute 74 source code in the flash, the CPU must first receive decrypted data from the MEU. Once all the source code has been executed, the CPU can sleep 76. Upon receipt of instructions, the CPU can also wake up 78 and undertake further warm reboots 80. As noted above, in order to execute source code, the CPU must receive decrypted data from the MEU. In order to decrypt the source code, the MEU computes 90 a MAC and checks 92 whether the MAC is of an expected value, i.e. whether the computed MAC based on the parameters used for the authentication code computation (the MAC) have been correctly used for the computation (i.e. that the Integrity of the data Is maintained). If the check 92 Is passed the MEU will successfully unwrap 94 the key and uses the unwrapped key to decrypt the data stored in the flash. The check step 90 is repeated for the data of the next address until the whole range has been computed.

When the device enters into sleep mode to save energy, the flash key and other settings are typically kept in registers whose content is not lost during sleep. This will avoid losing time unwrapping the key upon subsequent waking up of the system.

Later, during normal operation, the CPU can continue to make use of the MAC state machine in the background. Every few cycles when the flash is not being accessed, one flash location can be accessed to compute a MAC value. Once all the locations of the flash have been checked, the wrapped key will be unwrapped again, overwriting the previously used key. So if any bit of the flash has been changed, the code will not decode.

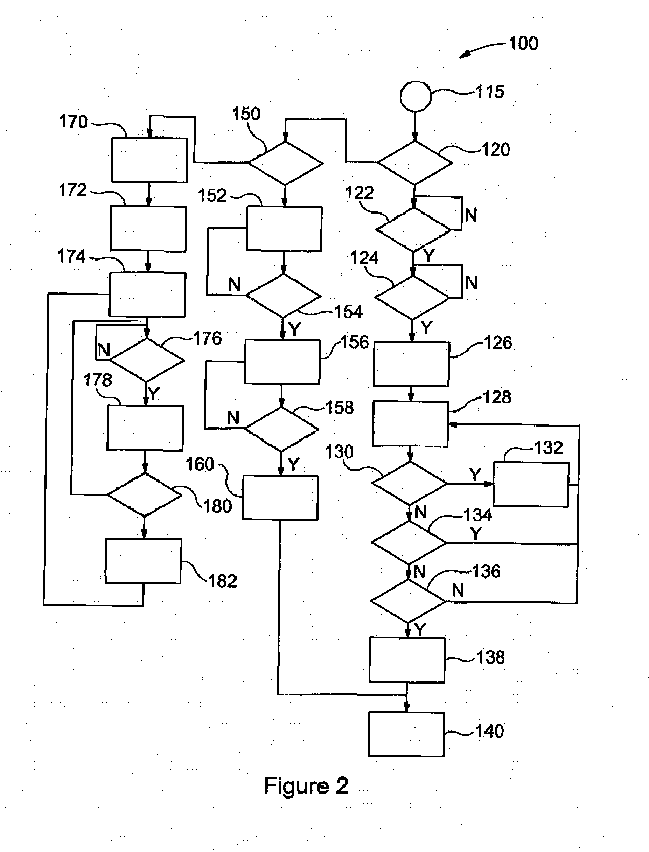

Figure 2 outlines the operation 100 of the device described above from the perspective of the MEU. Upon boot 115 of the device, the system may initiate a firmware flash update (step 120). In this instance, the CPU prompts the MEU to generate a key. The key is generated randomly. Once generated, the MEU checks and signals to the CPU that the key is ready (step 122). The CPU then submits a set of MAC parameters to the MEU, which are written 124 by the MEU, and instructs the MEU to enable encryption of the data (step 126) stored within the flash. The chip ID can be used as the key for the authentication code (the MAC) to ensure that if a device is hacked, a flash image of the key cannot be reused on any other device (which would have a different chip ID).

The MEU then waits 128 for the CPU. If the CPU writes to memory locations within the MAC area, (step 130), i.e. memory locations defined within the MAC generation parameters, then the MEU updates the MAC (step 132) based on the new data. If the CPU writes to memory locations outside those defined in the MAC (step 134), then the MAC is unchanged.

Once all regions have been written by the CPU, the MEU wraps the key using the MAC. The wrapped key is then sent to the CPU, which stores it in the flash (step 136). Once transmitted, the MEU then erases the key and the MAC (step 138). The system then reboots 140.

Upon cold boot 150, the MEU initially waits for commands 152 from the CPU. The CPU obtains the wrapped key from the flash and generates the MAC parameters using the same criteria determined during the initial or firmware update boot. The CPU then transmits the wrapped key and MAC to the MEU, which writes 154 the wrapped key and parameters. Once received, the MEU computes 156 the MAC using the received MAC parameters. The MEU then checks 158 the range of the MAC and, if the whole range of address to be protected has been used for MAC computation, unwraps 160 the wrapped key, allowing it to be used to decrypt the ciphertext stored in the flash.

After reboot 140, the system can enter a warm boot 170. The MEU undertakes background checks for Idle cycles of the flash (step 172). If the flash is idle for a predefined length of time (step 174), the MEU determines that the flash is idle (step 176) and computes the MAC based on stored parameters (step 178). If the MAC passes a check 180 that all address to be protected have been used for MAC computation, the key can be unwrapped and a counter reset 182. The counter indicates the time to next check of the integrity of the MAC and therefore the key and therefore the encrypted data.

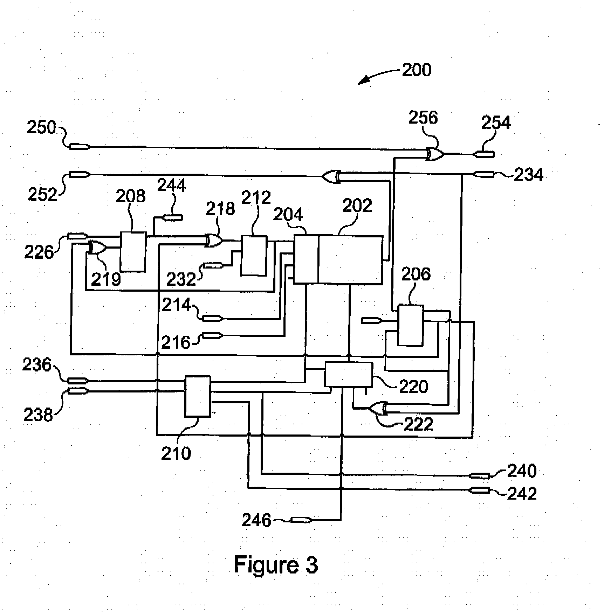

Figure 3 shows an architecture of a MEU 200 capable of implementing the processes described above. It can be appreciated that the functions active in the architecture depend on the operating state of the architecture (firmware update mode, cold boot, warm boot etc.).

Figure 3 shows a MEU 200 with a CPU encryption core 202. A flash key memory 204 is located within the encryption core 202. Registers, or buffers, 206, 208, 210, 212 are also part of the MEU architecture. In the example shown, a MAC register 206, wrapped key register 208, address decoding and generation register 210 and flash key register 212 are provided.

The flash key memory 204 is configured to receive signals (commands/inputs). In the architecture shown, the flash key memory can receive a signal from a flash key register 212, a ROM key input 214 and a SRAM key input 216. It can be appreciated that other keys may be stored in the flash key memory 204 in the MEU 200.

The flash key register 212 is configured to generate the key. The flash key register 212 is configured to receive inputs from a random number generator (RNG) stream 232 that may be used to generate the key. The flash key register is also configured to receive inputs from the wrapped key register 208 and the MAC register 206. As shown, the wrapped key register and MAC register inputs are coupled by an exclusive-OR gate (XOR) 218. By performing a MAC on the wrapped key, the wrapped key is unwrapped to provide the unwrapped or key. The key register 204 is also configured to provide the unwrapped key to the flash key memory 204. The CPU encryption core 202 can then compare the received unwrapped key to an existing unwrapped key stored within the flash key memory 204. Only If the supplied unwrapped key matches the stored key will an instruction to decrypt the contents of the computer readable memory be approved by the MEU 200.

The MAC register 206 is configured to generate a MAC based on parameters received from the external CPU or microprocessor. The MAC register 206 matches the length of the key and is configured to receive a network read 234, external CPU write 226 and may additionally feedback a generated MAC back into the MAC register 206. If an alternative MAC, other than CMAC is used, a different structure of the MAC register may be required.

The MAC register 206 is configured to provide the calculated MAC to the flash key register 212 and the wrapped key register 208. In both cases, XORs 218, 219 execute exclusive OR commands on the MAC output. For the input to the flash key register 212, the MAC and the wrapped key are fed through XOR 218 to provide the unwrapped key to the flash key register 204. Similarly, the unwrapped key may be combined with the MAC using a cipher, such as a block cipher shown as an XOR 219, to encrypt the key. In the present invention, this is described as wrapping the key. The wrapped key is then provided to the wrapped key register 208.

Additionally, the MAC is provided to a data multiplexer or mux 220 via an XOR 222 together with the input from the network read 234. This allows the encryption core 202 to receive the MAC on a network read request.

The wrapped key register 208 is configured to be written to by the external CPU via CPU write input 226. Additionally, the wrapped key register 208 receives an XOR 219 output of the flash key and the MAC. In addition to the output to the XOR 218, a CPU read 244 is also provided to read the value of the wrapped key.

An address decoding and generation register 210 is provided. This register receives address and operational code (OPCODE) inputs 236, 238 from the external CPU or microprocessor and address and OPCODE inputs 240, 242 from a network. The address decoding and generation register is configured to provide key and data addresses to the encryption core 202 and the data mux 220.

The data mux 220 additionally has an input from a nonce 246. The data mux acts to select which data stream is provided to the encryption core 202.

Other components in the architecture 200 include a CPU data write 250 and read 252, together with a network write 254. These can be combined using XORs 256, 258 to the encryption core 202 and the MAC register 296.

In addition to the description above, the wrapped key register 208 can be written only by the CPU during the cold boot process during the MAC setup stage of the state machine described in Fig 2. It can be read only at the end of the firmware update stage, once it has been updated with the content of the flash key XORed with the MAC register 206. Once read by the CPU, the content of each register is reset and a countdown will start to erase the SRAM key input 216 to the flash key memory 204.

For the flash key register 212, in the firmware update stage, the register 212 will be filled by a random value provided by the RNG stream 232 and then the process will move to the next stage. It will be written to at the cold boot stage and in normal mode, when MAC computation is finished, by the unwrapped key, obtained by XORing the wrapped key register 208 and MAC register 206.

The encryption core 202 is used for normal access. A Data XOR may also be provided. This unit can XOR data with the output of the encryption core 202. It can also apply a mask depending on the access (byte, half word or word) and operation (access to AHB (Advanced Microcontroller Bus Architecture high performance bus) or MAC computation.

The address decoding and generation unit 210 will receive address and OPCODE information of the CPU AHB access. Depending on this information it will select the correct key and nonce from the data mux 220 to be supplied to the encryption core 202. It will also directly forward the CPU request to the AHB system, except when handling address generation for MAC computation. For this purpose it will contain a counter covering the whole flash, i.e. 13 bits.

As described above, signals from this unit will control:
the Key selection mux - It will give the correct key to the encryption core. In normal mode, depending on the address It will select ROM, Flash or SRAM. When MAC is being computed it will select 0x0 or ROM key;
the Data selection mux - In normal mode, it will select the correct nonce 246 and concatenate to the address. In MAC mode, it will select the previous MAC value (most significant byte (MSB) register) XORed with data read from the flash. During nonce rotation it will get a decrypted value and store it in the flash register 212 for the next write.

In the firmware update mode 120, when the ROM Code programs the MEU 200 to the firmware update mode 120, then the MEU 200 will create a flash encryption key from the random generator 232.

The ROM Code will setup MAC settings, e.g. address range, key and initialisation vector (IV). To ensure that the key wrapping is unique, the Chip ID can be used, Parameters such as size, etc. will also be part of the IV. Once all the code/data to be protected has been written, the ROM Code will Instruct the MEU 200 to wrap the Key with a MAC.

The ROM Code will then recover the wrapped key and write it in flash EEPROM or external storage and perform a cold reboot.

After a Cold boot 150, the ROM Code will setup a MAC with parameters stored in non volatile memory, e.g. address range, wrapped key, IV and key, but also background check parameters such as frequency. The MEU will then perform a MAC over the ciphertext, unwrap the key and signal to the CPU that it has finished via a status bit.

After a Warm reboot 170, the unwrapped key is stored in the MEU flash key register 204 so the CPU can use this key to decrypt the flash data and boot from flash, In the background, the MEU 200 will compute a MAC when the computer readable memory/flash is not accessed at a defined frequency and overwrite the key by unwrapping the wrapped key. In case of modification to the computer readable memory, whose parameters have been used to calculate the MAC, this will result in the wrong key being used by the MEU 200.

If Cold boot time Is important, two MAC operations could be performed, a first one for checking integrity on a cold boot and a second one for background checking. The first one will be performed on a limited area, e.g. 1 KB of the computer readable memory (i.e. the MAC is generated from parameters based on a limited size of the flash memory) whereas a second MAC could be performed on the whole flash. This second wrapped key could also be stored in flash, and used for background protection. This would require modifying the state machine to support two key wrappings, Once the first code is checked, the CPU will boot and program the background protection to run using the second MAC. This will still ensure that the plaintext key never leaves the flash key memory 204 of the MEU 200 and ensure a quick boot. The drawback is that some rogue code can execute during first background check.

In summary, the present disclosure aims to expose the execution of unwanted or malicious code during the boot process. The proposal Is to rewire the memory encryption unit (MEU) in such a manner that the additional cost will be low and that it can easily be performed in the background, during normal device operation.

From reading the present disclosure, other variations and modifications will be apparent to the skilled person. Such variations and modifications may involve equivalent and other features which are already known in the art of cryptography and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of encrypting data stored within computer readable memory of a device, the method comprising the steps of:
providing a key;
encrypting the data stored in the computer readable memory using the key;
generating an authentication code based on parameters stored in the computer readable memory;
wrapping the key using the authentication code to generate a wrapped key; and
storing the wrapped key in the computer readable memory, wherein the validity of the wrapped key is linked to the authenticity of the data stored In the computer readable memory.

2. The method of claim 1, wherein the step of encrypting the data comprises:
generating a ciphertext using the key for at least one memory location located within the computer readable memory.

3. The method of claim 2, wherein the parameters include the ciphertext of at least one memory location in the memory.

4. The method of claim 3, wherein the step of wrapping the key comprises the step of performing a message authentication code on the ciphertext encrypted by the said key.

5. The method of any one of the preceding claims, wherein the step of wrapping the key comprises the step of encrypting the key using the message authentication code.

6. The method of claim 4 or claim 5, wherein the message authentication code is a message authentication code, either cipher based, hash based or any other cryptographic process.

7. The method of any preceding claim, wherein providing a key comprises the step of storing the key in a memory encryption unit, known as MEU.

8. The method of claim 7, wherein the step of encrypting the data is undertaken by the MEU.

9. The method of claim 7 or claim 8, wherein the step of wrapping the key is undertaken on the MEU.

10. The method of any preceding claim, wherein the computer readable memory is a non volatile memory, such as EEPROM.

11. A method of decrypting data stored within computer readable memory of a device, said method comprising the steps of:
retrieving a first wrapped key from the computer readable memory;
computing a first authentication code based on parameters stored in the computer readable memory;
unwrapping the first wrapped key using the authentication code to retrieve a key; and
decrypting the encrypted data using the key to provide the decrypted data, wherein the validity of the key is linked to the authenticity of the data stored in the computer readable memory.

12. The method of claim 11, further comprising the steps of:
retrieving a second wrapped key from the computer readable memory;
computing a second authentication code based on parameters dependent upon every location of the computer readable memory; and
decrypting all the data stored in the computer readable memory, such that the validity of all the decrypted data stored in the computer readable memory is dependent upon the authenticity of the data stored in the computer readable memory.

13. The method of claim 11 or claim 12, wherein the first and/or second wrapped key is provided by the encryption method described in any one of claims 1 to 10.

14. A memory encryption unit for encrypting data stored in a computer readable memory, said memory encryption unit comprising:
a plurality of buffers and a plurality of units, wherein the buffers comprise:
a key register for receiving a key;
a cipher-based message authentication code register for receiving and storing an authentication code, the authentication code linked to the data stored in the computer readable memory; and
a wrapped key register for receiving and transmitting a wrapped key, wherein the wrapped key is the key encrypted with the authentication code, and wherein the units comprise:
an encryption core for encrypting and decrypting data stored in the computer readable memory using the key; and
an operation module for implementing the authentication code.

15. The memory encryption unit of claim 14, further comprising an address decoding and generation unit for providing the key to the encryption core and for providing the authentication code to the data exclusive or.

## Amended claims

### Amended claims in accordance with Rule 137(2) EPC.

1. A method of encrypting data stored within computer readable memory of a device, the method comprising the steps of:
providing a key;
encrypting the data stored in the computer readable memory using the key, the step of encrypting the data comprising generating a ciphertext using the key for at least one memory location located within the computer readable memory;
generating an authentication code based on parameters stored in the computer readable memory wherein the parameters include the ciphertext of at least one memory location in the memory;
wrapping the key using the authentication code to generate a wrapped key; and
storing the wrapped key in the computer readable memory, wherein the validity of the wrapped key is linked to the authenticity of the data stored in the computer readable memory.

2. The method of claim 1, wherein the step of wrapping the key comprises the step of performing a message authentication code on the ciphertext encrypted by the said key.

3. The method of claims 1 or 2, wherein the step of wrapping the key comprises the step of encrypting the key using the message authentication code.

4. The method of any preceding claim, wherein the message authentication code is a cipher based message authentication code.

5. The method of claims 1 to 3, wherein the message authentication code is hash based.

6. The method of claims 1 to 3, wherein the message authentication code is based on a cryptographic process.

7. The method of any preceding claim, wherein providing a key comprises the step of storing the key in a memory encryption unit, known as MEU.

8. The method of claim 7, wherein the step of encrypting the data is undertaken by the MEU.

9. The method of claim 7 or claim 8, wherein the step of wrapping the key is undertaken on the MEU.

10. The method of any preceding claim, wherein the computer readable memory is a non volatile memory, such as EEPROM.

11. A method of decrypting data stored within computer readable memory of a device, said method comprising the steps of:
retrieving a first wrapped key from the computer readable memory;
computing a first authentication code based on parameters stored in the computer readable memory wherein the parameters include the ciphertext of at least one memory location in the memory;
unwrapping the first wrapped key using the first authentication code to retrieve a key; and
decrypting the encrypted data using the key to provide the decrypted data, wherein the validity of the key is linked to the authenticity of the data stored in the computer readable memory.

12. The method of claim 11, further comprising the steps of:
retrieving a second wrapped key from the computer readable memory;
computing a second authentication code based on parameters dependent upon every location of the computer readable memory; and
decrypting all the data stored in the computer readable memory, such that the validity of all the decrypted data stored in the computer readable memory is dependent upon the authenticity of the data stored in the computer readable memory.

13. The method of claim 11 or claim 12, wherein the first and/or second wrapped key is provided by the encryption method described in any one of claims 1 to 10.

14. A memory encryption unit for encrypting data stored in a computer readable memory, said memory encryption unit comprising:
a plurality of buffers and a plurality of units, wherein the buffers comprise:
a key register for receiving a key;
a cipher-based message authentication code register for receiving and storing an authentication code, the authentication code linked to the data stored in the computer readable memory; and
a wrapped key register for receiving and transmitting a wrapped key, wherein the wrapped key is the key encrypted with the authentication code, and wherein the units comprise:
an encryption core for encrypting and decrypting data stored in the computer readable memory using the key; and
an operation module for implementing the authentication code.

15. The memory encryption unit of claim 14, further comprising an address decoding and generation unit for providing the key to the encryption core and for providing the authentication code to the data exclusive or.
